# EUROPEAN PATENT SPECIFICATION

(11) **EP 0 526 773 B1**
(45) Date of publication and mention of the grant of the patent: **06.12.1995**
(21) Application number: 92111906.1
(22) Date of filing: 13.07.1992
(51) Int. Cl.: G21C 1/09

(54) **Pressurising apparatus for pressure vessels**
Druckhalterapparat für Druckbehälter
Pressuriseur pour cuve à pression

(30) Priority: 30.07.1991 IT MI912119
(43) Date of publication of application: 10.02.1993
(73) Proprietor: FINMECCANICA S.p.A. AZIENDA ANSALDO, I-16128 Genova (IT)
(72) Inventor: Cinotti, Luciano, I-16036 Recco (Genova) (IT)
(74) Representative: Falcetti, Carlo

(56) References cited:
- EP-A- 0 359 716
- GB-A- 2 217 511
- US-A- 3 095 012
- PATENT ABSTRACTS OF JAPAN vol. 14, no. 561 (P-1142), 13 December 1990 & JP-A-02 240 593

## Description

The present invention relates to pressurising apparatus of the type comprising a cylindrical tank divided by a partition into a lower part containing cold water and an upper part containing hot water in equilibrium with a mass of steam above it.

Apparatus is known from EP-A-0 359 716 which is adapted to maintain at a predetermined value the pressure in a pressure vessel hydraulically connected thereto, in this patent containing a nuclear reactor.

This apparatus consists of an elongate cylindrical tank within which there is a lower part containing cold water and an upper part containing hot water separated by a dividing partition; the upper and lower parts of the tank are in hydraulic communication by means of connecting ducts.

The water in the upper part is heated by electrical resistances or other means and is in thermodynamic equilibrium with steam which is present in the top of the tank.

The heating of the water in the upper part of the apparatus keeps the steam in equilibrium therewith at a predetermined pressure which it transmit, through the connecting ducts to the water in the lower part of the apparatus.

When, however, the pressure in the apparatus becomes too high, for example for reasons connected with the operation of the nuclear reactor, it is necessary to be able to reduce it to the desired values.

A known method for satisfying this requirement is to spray water at a lower temperature than that of the water in the apparatus from the exterior of the tank into the mass of steam; following its contact with the water, the steam condenses and its pressure, and consequently that of the apparatus, falls.

This method is effected by means of circuits outside the tank which are arranged to take water from regions with pressures similar to those of the apparatus, for example, down stream of pumps in the hydraulic system connected to the reactor. These generally include a valve for shunting water into a duct which opens into the top of the tank.

GB-A-2,217,511 discloses an improved water cooled nuclear reactor and pressuriser in which a separate pressuriser, contains a steam space and a water space, separate by a water level, and the water space is interconnected by a surge pipe with the reactor core inlet plenum.

A vent pipe 708 interconnects the riser plenum with the steam space of the pressuriser.

By providing the surge pipe with a hydraulic diode, a substantive surge flow can be passed, in case of positive volume surges, through the vent pipe to the steam space.

As a consequence the steam is sprayed with cooling water at the temperature of the reactor core exit plenum which however lesser than the one of the steam, is quite high and provides a limited condensation effect much lesser than the one provided by cold water spraying.

The technical problem which is at the root of the present invention is that of providing pressurizing apparatus with structural and functional characteristics such as to overcome the aforesaid disadvantages of the prior art examples, that is, which does not require an external pressure-regulating circuit.

This problem is solved by apparatus of the type mentioned above, characterised in that it includes at least one duct connecting the first and second parts, having a first end immersed in the hot water in the upper part and a second end immersed in the cold water in the lower part, at least one condensation duct having a first end located in the steam mass and a second end immersed in the cold water in the lower part.

Further characteristics and advantages of the invention will become clearer from a description of one embodiment thereof, given by way of non-limiting example, with reference to the appended drawings.

In these drawings:
Figure 1 is a sectioned elevational view of pressurising apparatus according to the invention;
Figure 2 is a sectioned elevational view of a second pressurising apparatus of the invention.

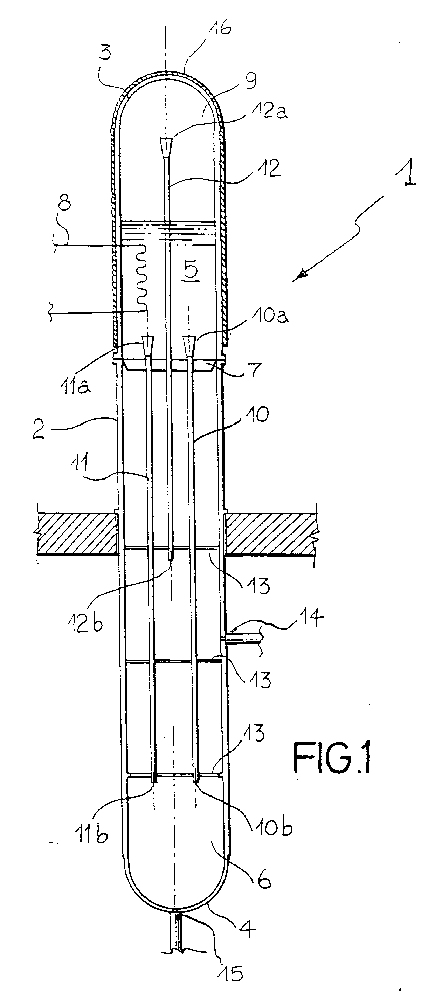

With reference to these drawings, and in particular to Figure 1, pressurising apparatus according to the invention is generally indicated 1.

The apparatus 1 comprises a cylindrical tank 2 with upper and lower hemispherical end walls 3, 4; the tank 2 is also divided transversely into two parts, an upper part 5 and a lower part 6 respectively, by a partition 7.

The lower part 6 of the tank 2 contains cold water up to the level of the partition while the water in the upper part 5 is heated by an electrical resistance 8.

The hot water does not completely fill the upper part 5 and is in equilibrium with a mass 9 of steam in the top 3 of the tank 2.

A pair of connecting ducts 10 and 11 pass through the partition 7 and extend from respective first ends 10a, 11a immersed in the hot water in the upper part 5 of the tank to respective second ends 10b, 11b located in the lower part 6.

A third, condensation duct 12 passes through the partition 7 and extends from a first end 12a located in the steam mass 9 to a second end 12b located in the lower part 6. According to a preferred embodiment, in this example the second end 12b is closer to the partition 7 than the corresponding ends 10b, 11b of the ducts 10 and 11.

A series of supports 13, in this example constituted by grids, extend transversely in the lower part 6 establishing the location of the ducts 10, 11 and 12 within the pressurising apparatus 1.

The lower part 6 of the tank 2 also has two apertures 14, 15 connected hydraulically to a pressurised vessel not shown in the drawing.

The upper part 5 of the tank is covered with a layer 16 of insulating material.

With reference to the pressurising apparatus described above, the operation of the invention is as follows.

As may be understood from the embodiment illustrated, the electrical resistance 8 supplies the heat necessary for keeping the pressure within the pressurising apparatus 1 above a predetermined minimum value.

In fact, by varying the heat produced thereby, one can regulate the temperature of the water in the upper part of the pressurising apparatus and consequently the pressure of the overlying steam mass 9.

The pressure of the entirety of the pressurising apparatus 1 is regulated together with that of the steam by virtue of the connection between the lower and upper parts constituted by the ducts 10, 11 and 12.

When the pressure in the vessel associated with the apparatus 1 rises to values higher than those in the pressurising apparatus as a result of pressure variations, a water circulation is established from the container to the pressurising apparatus and enters the apparatus 1 through the apertures 14 and 15.

As a result of this circulation, the water in the lower part 6 is forced through the ducts 10, 11 and 12 into the upper part 5.

If the load losses in the ducts 10 and 11 are greater than the static head of water in the duct 12, this head being measured between the level of the end 12a and the level of the hot water contained in the upper part 5, a jet of water is emitted from the end 12a.

This cold water jet causes the steam mass 9 to condense and consequently the pressure in the pressurising apparatus 1 falls.

It is important to stress that the pressurising apparatus formed as described above has numerous advantages.

Principally, it is able to control the pressure by virtue of its structural characteristics alone.

As is apparent from the description of its operation, so-called "active means", or mechanical pump means of means, shunting water from the exterior into the steam mass are not required to condense the steam; moreover such means, in addition to the disadvantages mentioned above in relation to the prior art, would introduce problems of reliability and safety.

Indeed, apparatus according to the invention ensures constant operation without the risk of breakdown of mechanical parts which could create dangerous situations given the high pressures in play.

The invention as described above can, however, be varied.

For example, it is possible to form the pressurising apparatus with several condensation ducts or ducts extending between respective first ends located in the steam overlying the hot water each at a height different from the others, to respective second ends located in the lower part 6 of the pressurising apparatus.

This would enable finer and more gradual regulation of the pressure in the apparatus 1 to be achieved; more particularly, as a result of water circulating from the pressurised vessel to the pressurising apparatus as envisaged above, the cold water would leave the condensation ducts and flow into the steam at different respective pressures.

In fact, each first end of the condensation ducts located in the steam would have a different static head, as defined above; when the water circulation were such as to overcome the head of each condensation duct, the water would flow out.

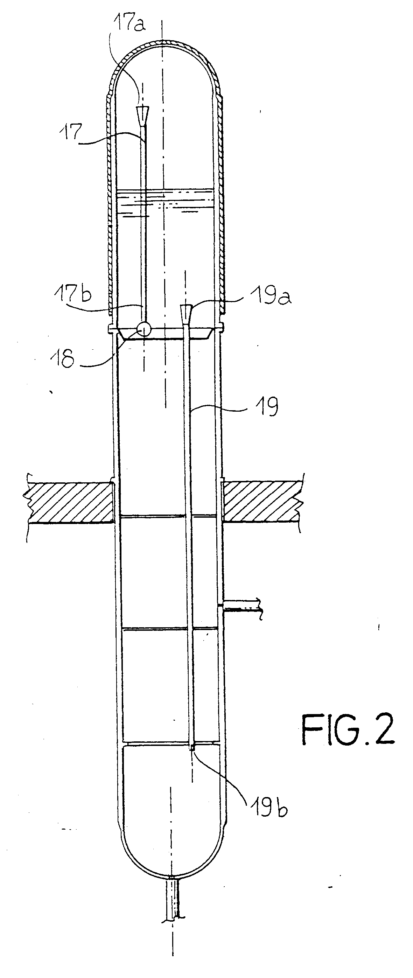

A further embodiment of the invention may be formed by integrating the pressurising apparatus described above with several additional structural elements shown in Figure 2.

With reference to this drawing, the pressurising apparatus according to the first embodiment of the invention is shown in which the ducts 10, 11 and 12 are not shown for simplicity, the additional structural elements introduced being shown instead.

These additional elements are identified by reference numerals while the elements common to the two embodiments have not been referenced.

The pressurising apparatus 1 shown in Figure 2 includes a delivery duct 17 extending through the upper part 5 of the pressurising apparatus 1; this duct has a first end 17a located in the steam mass 9 and a second end 17b communicating with the volume 6.

A suction pump 18 for drawing water from the lower part 6 of the pressurising apparatus 1 is located in this duct, for example at the second end 17b.

A supplementary duct 19 passes through the partition 7 and, like the ducts 9 and 10 of the first embodiment of the invention, extends between a first end 19a immersed in the hot water in the upper part 5 and a second end 19b located in the lower part 6.

In this second embodiment of the pressurising apparatus, the pump 18 is controlled by a pressostat or any other conventional means not shown here; it sprays water drawn from the lower part 6 into the steam mass 9 causing it to condense and hence lowering the pressure as already seen above.

The pump 18 used is a small sized pump since it need overcome only the static head between the end 17a of the duct 17 and the level of the hot water contained in the upper part 5.

The operating characteristics of the ducts 10, 11 and 12 remain the same as will be better understood below.

The advantages of this second embodiment result from the structural and functional characteristics of the first embodiment of the pressurising apparatus combined with those of the additional elements described above.

More particularly, when it is necessary to reduce the pressure in the steam mass 9 as a result of a progressive increase in the pressure in the vessel, the action of the pump 18 activated by its pressostat, suffices to return the situation to normal.

On the other hand, when there are sudden increases in pressure within the vessel, for example because of a breakdown or operational failure of a reactor located in the vessel, the ducts 10, 11, 12 and 19 of the pressurising apparatus provide better compensation for these sharp increases.

The explanation of the above lies in the fact that the response times of the additional structural elements, mainly due to the detection of the pressure increase by the pressostat and subsequent starting of the pump 18 are fairly long and are better adapted to compensate for fairly slow pressure changes.

The ducts 10, 11, 12 and 19 however come into action immediately the pressure variation in the container is such as to cause sufficient water to flow into the pressurising apparatus 1.

There is thus no initiating pressure change for the pressure regulation effected by these ducts and, instead, when compensation is required for high pressure peaks these ducts are able to ensure that the pressurising apparatus operates properly and without the possibility of the breakdown to which the pump 18, could, however, be subject.

Finally it should be stressed that it is possible to calibrate the pressurising apparatus by acting on the load losses within the ducts 10, 11, 12 and 19, or by suitable dimensioning of their lengths and diameters during design.

More particulary, it is possible to set the level at which the pressure regulation effected by these ducts comes into operation at a predetermined value of pressure variation per unit time.

A further result of the suitable design of the ducts is that of enabling cold water to flow into the steam mass so as to reduce its pressure at a predetermined rate to enable the apparatus to operate more or less rapidly.

## Claims

1. Pressurising apparatus of the type comprising a cylindrical tank (2) divided by a partition (7) into a lower part (6) containing cold water and an upper part (5) containing hot water in equilibrium with a mass of steam (9) above it, the lower part of said tank having at least duct (14,15) for communication with a separate vessel to be pressurized, characterised in that it includes at least one duct (10, 11) connecting the first and second parts having a first end (10a, 11a) immersed in the hot water in the upper part (5) and a second end (10b, 11b) immersed in the cold water in the lower part (6), and at least one condensation duct (12) having a first end (12a) located in the steam mass (9) and a second end (12b) immersed in the cold water in the lower part (6).

2. Pressurising apparatus according to Claim 1, characterised in that it includes a delivery duct (17) having a first end (17a) located in the steam mass above the hot water and a second end (17b) communicating with the lower part (6) of the tank (2), the delivery duct (17) having a pump (18) for drawing cold water from the lower part (6) of the tank.

## Patentansprüche

1. Druckhalterapparat der Art, die einen zylindrischen Tank (2) aufweist, der durch ein Schott (7) in einen unteren Teil (6), der kaltes Wasser enthält, und einen oberen Teil (5) geteilt ist, der heißes Wasser enthält, das im Gleichgewicht mit einer Masse Dampf (9) über diesem ist, wobei der untere Teil des Tanks wenigstens einen Kanal (14, 15) hat, für eine Verbindung mit einem separaten Kessel, der mit Druck beaufschlagt wird, dadurch gekennzeichnet, daß er wenigstens einen Kanal (10, 11), der die ersten und zweiten Teile verbindet, mit einem ersten Ende (10a, 11a), das in das heiße Wasser im oberen Teil (5) eingetaucht ist, und einem zweiten Ende (10b, 11b), das in das kalte Wasser im unteren Teil (6) eingetaucht ist, und wenigstens einen Kondensationskanal (12) aufweist, mit einem ersten Ende (12a), das in der Dampfmasse (9) angeordnet ist, und einem zweiten Ende (12b), das in das kalte Wasser im unteren Teil (6) eingetaucht ist.

2. Druckhalterapparat nach Anspruch 1, dadurch gekennzeichnet, daß er einen Zuführungskanal (17) aufweist, mit einem ersten Ende (17a), das in der Dampfmasse oberhalb des heißen Wassers angeordnet ist, und einem zweiten Ende (17b), das mit dem unteren Teil (6) des Tanks (2) in Verbindung steht, wobei der Zuführungskanal (17) eine Pumpe (18) aufweist, um kaltes Wasser vom unteren Teil (6) des Tanks abzuziehen.

## Revendications

1. Dispositif de mise en pression du type comprenant un réservoir cylindrique (2) divisé par une séparation (7) en une partie inférieure (6) contenant de l'eau froide et en une partie supérieure (5) contenant de l'eau chaude en équilibre avec une masse de vapeur (9) au-dessus d'elle, la partie inférieure dudit réservoir ayant au moins un conduit (14, 15) pour communiquer avec un récipient distinct devant être mis en pression, caractérisé en ce qu'il comprend au moins un conduit (10, 11) raccordant les première et seconde parties, comportant une première extrémité (10a, 11a) immergée dans l'eau chaude de la partie supérieure (5) et une seconde extrémité (10b, 11b) immergée dans l'eau froide de la partie inférieure (6), et au moins un conduit de condensation (12) ayant une première extrémité (12a) située dans la masse de vapeur (9) et une seconde extrémité (12b) immergée dans l'eau froide de la partie inférieure (6).

2. Appareil de mise en pression selon la revendication 1, caractérisé en ce qu'il comprend un conduit d'alimentation (17) ayant une première extrémité (17a) située dans la masse de vapeur au-dessus de l'eau chaude et une seconde extrémité (17b) communiquant avec la partie inférieure (6) du réservoir (2), le conduit d'alimentation (17) comportant une pompe (18) pour soutirer l'eau froide de la partie inférieure (6) du réservoir.
